# EUROPÄISCHE PATENTANMELDUNG

(11) **EP 1 616 779 A1**
(43) Veröffentlichungstag der Anmeldung: **18.01.2006**
(21) Anmeldenummer: 04016664.7
(22) Anmeldetag: 15.07.2004
(51) Int. Cl.: B62K 21/08

(54) **Feststellbares Lenkungslager**

(71) Anmelder: Biria AG, 01904 Neukirch (DE)
(72) Erfinder: Biria, Mehdi, 01904 Neukirch (DE)
(74) Vertreter: von den Steinen, Axel

(57) **Zusammenfassung**

Fahrrad mit einem Rahmen (01) und einer Lenkeinrichtung, die am Rahmen (01) in einem Führungselement drehbar gelagert ist, wobei der Fahrer durch Betätigung der Lenkeinrichtung die Stellung des Vorderrades relativ zum Rahmen (01) einstellen kann. Am Fahrrad ist eine Arretiereinrichtung (16) vorgesehen, wobei mit der Arretiereinrichtung (16) zwischen Lenkeinrichtung und Rahmen (01) eine Feststellkraft zur Arretierung der Stellung des Vorderrades relativ zum Rahmen (01) aufbringbar ist.

## Beschreibung

Die Erfindung betrifft ein Fahrrad mit einer Lenkeinrichtung nach dem Oberbegriff des Schutzanspruchs 1.

Fahrräder der eingangs genannten Art weisen einen Rahmen und eine Lenkeinrichtung, die am Rahmen in einem Führungselement drehbar gelagert ist, auf, wobei der Fahrer durch Betätigung der Lenkeinrichtung die Stellung des Vorderrades relativ zum Rahmen einstellen kann. Diese Fahrräder sind zumeist so konstruiert, dass die in sich selbst nicht drehbare Lenkeinrichtung das an einer Gabel befestigte Vorderrad und die an der anderen Seite der Gabel mittelbar oder unmittelbar befestigte Lenkstange aufweist.

Diese Lenkeinrichtung wird zumeist im Steuerkopf des Rahmens drehbar gelagert. Somit kann durch eine Lenkkraft die Stellung der Lenkeinrichtung relativ zum Rahmen verändert werden. Dies kann zum einen durch Betätigung der Lenkeinrichtung durch den Fahrer erfolgen, ist aber zum anderen auch durch Einwirken anderer äußerer Kräfte bedingt.

Ist an der Lenkeinrichtung beispielsweise ein Fahrradkorb oder ein Kindersitz befestigt, so kann die Gewichtskraft des Transportbehältnisses und/oder seines Inhaltes eine Verstellung der Lenkeinrichtung bei abgestelltem Fahrrad zur Folge haben. Diese nicht erwünschte Verstellung der Lenkeinrichtung kann zum einen das Beladen des Transportbehältnisses behindern und kann zum anderen das Umkippen des abgestellten Fahrrades zur Folge haben. Durch das Umkippen des abgestellten Fahrrades kann der Inhalt des Transportbehältnisses zu Boden fallen und somit zu Schaden kommen.

Aufgabe der vorliegenden Erfindung ist es deshalb, ein neues Fahrrad vorzuschlagen, bei dem die Verstellung der Lenkeinrichtung relativ zum Rahmen durch eine Arretiereinrichtung verhindert werden kann.

Diese Aufgabe wird durch die vorliegende Erfindung nach der Lehre des Schutzanspruchs 1 gelöst.

Vorteilhafte Ausführungsformen der Erfindung sind Gegenstand der Unteransprüche.

Erfindungsgemäß wird das Problem der Verhinderung einer Verstellung der Lenkeinrichtung relativ zum Rahmen dadurch gelöst, dass am Fahrrad eine Arretiereinrichtung vorgesehen ist, wobei mit der Arretiereinrichtung zwischen Lenkeinrichtung und Rahmen eine Feststellkraft zur Arretierung der Stellung des Vorderrades relativ zum Rahmen aufbringbar ist. Die Ausformung der Arretiereinrichtung und die Art der Aufbringung der Feststellkraft ist grundsätzlich beliebig.

Von besonderem Vorteil ist es jedoch, wenn die Arretiereinrichtung zumindest ein mit der Lenkeinrichtung drehfest verbundenes erstes Reibelement und ein mit dem Rahmen drehfest verbundenes zweites Reibelement aufweist, wobei die Feststellkraft durch Reibschluss zwischen erstem und zweiten Reibelement aufbringbar ist. Die drehfeste Verbindung der Reibelemente jeweils mit der Lenkeinrichtung und mit dem Rahmen ist hinsichtlich der Aufbringung der Feststellkraft durch Reibschluss von Vorteil, um eine definierte Reibfläche zwischen den Reibelementen zu erzeugen und nicht etwa eine sich auf die Arretierwirkung kontraproduktiv auswirkende Drehbewegung zwischen erstem Reibelement und der Lenkeinrichtung bzw. dem zweiten Reibelement und dem Rahmen zu begünstigen.

Dadurch entsteht zwischen Lenkeinrichtung und Rahmen zu den vorhandenen Kontaktstellen, die durch die Steuerlager gebildet werden, eine zusätzliche Kontaktstelle zwischen den beiden Reibelementen. Zwischen den beiden Reibelementen ist die Feststellkraft aufbringbar, deren Wirkung schließlich die Arretierung der Lenkeinrichtung ist. Die Ausformung der Reibelemente ist prinzipiell ohne Belang.

Diese Ausführungsform bietet den besonderen Vorteil, dass eine zwischen den Reibelementen durch Reibschluss aufgebrachte Feststellkraft durch eine größere Kraft, die beispielsweise vom Fahrer auf die Lenkstange ausgeübt wird, falls die Arretiereinrichtung zuvor nicht gelöst wurde, leicht überwindbar ist. Denn falls die Arretiereinrichtung derart ausgebildet sein sollte, dass die Feststellkraft durch Formschluss zwischen Lenkeinrichtung und Rahmen aufbringbar ist, so würde sich das Fahrrad nicht mehr lenken lassen, der Fahrer und/oder das Fahrrad zu Boden fallen und/oder zu Schaden kommen.

Es ist sinnvoll, jedoch aber nicht notwendig, die Arretiereinrichtung am Fahrrad dauerhaft zu befestigen. Während der Fahrt darf die Arretiereinrichtung keine Wirkung zeigen, um die Sicherheit nicht zu gefährden. Wird das Fahrrad beispielsweise geparkt oder abgestellt, so müsste eine nicht dauerhaft am Fahrrad befestigte Arretiereinrichtung angebracht werden und eine dauerhaft am Fahrrad befestigte Arretiereinrichtung betätigt werden. Für die Betätigung der Arretiereinrichtung ist eine Betätigungseinrichtung an der Arretiereinrichtung vorgesehen, wobei durch Betätigen der Betätigungseinrichtung eine Betätigungskraft auf die Reibelemente ausgeübt wird. Als Wirkung der Betätigungskraft auf die Reibelemente kann sich beispielsweise die Feststellkraft an der Kontaktfläche zwischen den Reibelementen einstellen.

Besonders vorteilhaft ist es beispielsweise, wenn die Größe der Feststellkraft als Wirkung des Verstellens der Betätigungseinrichtung mittelbar oder unmittelbar, insbesondere stufenlos, veränderbar ist. Somit kann die Festigkeit der Feststellung der Lenkeinrichtung relativ zum Rahmen der jeweiligen Situation angepasst werden. So kann beispielsweise bei einem schweren, an der Lenkeinrichtung befestigten Transportbehältnis eine große Feststellkraft zur Arretierung der Lenkeinrichtung relativ zum Rahmen aufgebracht werden und bei einem leichten, an der Lenkeinrichtung befestigten Transportbehältnis eine entsprechend kleinere Feststellkraft zur Arretierung der Lenkeinrichtung relativ zum Rahmen aufgebracht werden.

Die Ausbildung und Anordnung der Reibelemente ist grundsätzlich ohne Belang. Um eine einfache Montage der Reibelemente zu ermöglichen und eine möglichst große Kontaktfläche zwischen den Reibelementen zu erzeugen, ist es jedoch von besonderem Vorteil, die Reibelemente den Gabelschaft ringförmig umschließen zu lassen.

Die drehfeste Verbindung von erstem Reibelement und Lenkeinrichtung sowie von zweitem Reibelement und Rahmen ist von besonderer Bedeutung. Die drehfeste Verbindung von erstem Reibelement und Lenkeinrichtung kann dadurch erreicht werden, dass das erste Reibelement mit zumindest einem Abschnitt der Kontermutter formschlüssig verbunden ist. Die zur Fixierung eines Steuerlagers mit der Lenkeinrichtung, insbesondere dem Gabelschaft, fest verbundene Kontermutter bietet für eine drehfeste Verbindung des ersten Reibelementes mit der Lenkeinrichtung durch Formschluss wegen der kantigen Ausbildung einer Mutter eine gute Basis.

Durch diese Art der drehfesten Verbindung von erstem Reibelement mit der Lenkeinrichtung wird eine zweite Reibstelle zwischen erstem Reibelement und der Lenkeinrichtung vermieden und folglich eine Lockerung der Arretiereinrichtung durch eine Relativbewegung von erstem Reibelement und einer zur Betätigung drehbar an der Lenkeinrichtung befestigten Betätigungseinrichtung nach der Betätigung verhindert.

Ein Reibelement, das diese Anforderungen erfüllt, könnte eine mit dem Querschnitt zumindest eines Abschnitts der Kontermutter korrespondierende Aussparung zur formschlüssigen Aufnahme der Kontermutter aufweisen. Dazu wird das Reibelement beispielsweise in Form eines an einer Seite teilweise geschlossenen Zylinders ausgebildet, wobei die verbleibende Öffnung der einen Seite des Zylinders beispielsweise in Form eines Achtecks ausgebildet ist, so dass eine Mutter, insbesondere die Kontermutter, genau in diese Öffnung hinein passt.

Um eine gute Arretierwirkung der Arretiereinrichtung zu bewirken, ist die drehfeste Verbindung zwischen zweitem Reibelement und dem Führungselement des Rahmens von genauso großer Bedeutung. Denn wenn die Verbindung zwischen zweitem Reibelement und dem Führungselement des Rahmens beispielsweise reibschlüssig wäre, würde sich die Arretierwirkung der Arretiereinrichtung um diesen Betrag vermindern. Besonders vorteilhaft ist es, wenn das zweite Reibelement mit dem Führungselement des Rahmens, insbesondere durch eine Pressverbindung, formschlüssig verbunden ist.

Eine mögliche Ausführungsform eines Reibelementes, das diese Anforderungen erfüllt, ist die Ausbildung des Reibelementes als ein an einer Seite zumindest teilweise geschlossener Zylinderring. Ein derart ausgebildetes Reibelement könnte beispielsweise zusammen mit einem Teil des Steuerlagers oder alleine in das Führungselement des Rahmens, insbesondere den Steuerkopf, eingepresst werden.

Das Ausmaß der Arretierwirkung wird maßgeblich von der Größe der Kontaktfläche zwischen den Reibelementen bestimmt. Daher ist eine möglichst große Kontaktfläche zwischen den beiden Reibelementen erstrebenswert. Um die Kontaktfläche der beiden Reibelemente zu vergrößern, ist es beispielsweise denkbar, die Kontaktfläche relativ zur Wirkungslinie der Betätigungskraft, insbesondere der Lenkachse, zu neigen. Erfindungsgemäß wird hierzu ein Winkel von 30° vorgeschlagen. Es ist jedoch auch jeder andere Winkel denkbar.

Eine weitere Abhängigkeit der Arretierwirkung wird von der Oberflächenbeschaffenheit der Reibelemente bestimmt. Um eine effiziente reibschlüssige Verbindung zwischen den Reibelementen zu erhalten, ist es von Vorteil, wenn zumindest ein Reibelement abschnittsweise eine gleithemmende und/oder haftunterstützende Oberfläche aufweist. Dazu kann einerseits auf Material zurückgegriffen werden, das eine hohe Gleitreibung und/oder Haftreibung aufweist. Andererseits kann die Oberfläche der Reibelemente durch eine Nachbehandlung mit hoher Gleitreibung und/oder hoher Haftreibung versehen werden. Ebenfalls denkbar ist die Aufbringung einer Oberfläche mit diesen Eigenschaften. Eine weitere Ausführungsform wäre die Ausbildung zumindest eines

Reibelementes in Form eines Bremsbelages.

Um die Feststellkraft zwischen Lenkeinrichtung und Rahmen aufzubringen, ist es notwendig, die Arretiereinrichtung zu betätigen. Dazu ist an der Arretiereinrichtung eine Betätigungseinrichtung vorgesehen. Diese Betätigungseinrichtung wird bevorzugter Weise manuell betätigt, kann aber auch durch eine Automatik betätigt werden.

Besonders vorteilhaft ist es, die Betätigungseinrichtung in Form einer manuell betätigbaren Rändelmutter auszubilden. Eine Rändelmutter ist ohne Werkzeug bedienbar. Somit ist die Arretiereinrichtung überall verwendbar, auch wenn kein Werkzeug in der Nähe ist. Des Weiteren begünstigt eine Rändelmutter als Betätigungseinrichtung eine stufenlose

Einstellbarkeit der Feststellkraft.

Zur Befestigung der Betätigungseinrichtung ist es von besonderem Vorteil, wenn die Lenkeinrichtung eine Mutter aufweist, wobei zumindest ein Abschnitt der Mutter ein Außengewinde aufweist. Die mit der Lenkeinrichtung zur Fixierung eines Steuerlagers verbundene Kontermutter könnte diese Eigenschaft besitzen. Dazu wird ein Abschnitt der Kontermutter mit einem Außengewinde versehen und ein anderer Abschnitt der Kontermutter mit einem eckigen Querschnitt zur Aufnahme eines Schraubenschlüssels und zum Festschrauben der Kontermutter auf dem Gabelschaft versehen.

Die Betätigungseinrichtung, insbesondere eine Rändelmutter, kann durch Aufschrauben auf das Außengewinde der Kontermutter befestigt werden. Somit ist die Betätigungseinrichtung durch eine Schraubbewegung parallel zur Lenkachse beweglich, und es ist durch Festschrauben der Betätigungseinrichtung eine Betätigungskraft auf ein Reibelement ausübbar, wodurch dieses wiederum die Feststellkraft auf die insbesondere geneigte Kontaktfläche zwischen den zwei Reibelementen aufbringt.

An dieser Stelle wird die Wichtigkeit der formschlüssigen drehfesten Verbindung zwischen erstem Reibelement und der Lenkeinrichtung, insbesondere der Kontermutter, nochmals deutlich. Denn sowohl das erste Reibelement als auch die Kontermutter sowie die an der Kontermutter befestigte Betätigungseinrichtung nehmen an der Lenkbewegung teil.

Würde das erste Reibelement mit der Lenkeinrichtung nicht drehfest verbunden sein, so würde es während der Lenkbewegung zu einer Relativbewegung zwischen der Betätigungseinrichtung und erstem Reibelement an der Stelle, an der die Betätigungskraft übertragen wird, kommen, weil das erste Reibelement durch den Reibschluss in Kontakt zum zweiten Reibelement steht, welches wiederum mit dem Rahmen verbunden ist und nicht an der Lenkbewegung teilnimmt.

Durch die Relativbewegung zwischen erstem Reibelement und Betätigungseinrichtung könnte es während der Lenkbewegung zu einer Lockerung der Arretiereinrichtung, insbesondere der Betätigungseinrichtung, kommen und die Arretierwirkung der Arretiereinrichtung könnte vermindert werden.

Eine weitere Ausführungsform der Befestigung der Betätigungseinrichtung an der Lenkeinrichtung wäre, den Gabelschaft der Lenkeinrichtung mit einem Außengewinde zu versehen, wobei die Betätigungseinrichtung, insbesondere eine Rändelmutter, auf das Außengewinde des Gabelschafts aufschraubbar ist. Auch bei dieser Ausführungsform der Erfindung nimmt die Betätigungseinrichtung durch die Aufschraubung auf den Gabelschaft an der Lenkbewegung teil. Es ergeben sich die gleichen Vorteile in Bezug auf die Relativbewegung zum ersten Reibelement wie bei der Befestigung der Betätigungseinrichtung an der Kontermutter.

Die Form der Betätigungseinrichtung, insbesondere der Rändelmutter, ist grundsätzlich beliebig. Eine besonders vorteilhafte Ausformung der Betätigungseinrichtung besteht darin, dass die Betätigungseinrichtung das Steuerlager und/oder die Arretiereinrichtung umschließt. Dadurch schützt sie die Mechanik, insbesondere die Arretiereinrichtung und/oder das Steuerlager, die sie umschließt. Denn wäre die Mechanik ungeschützt, so würde sie Witterungseinflüssen und umherfliegendem Dreck ausgesetzt sein. Dies ist besonders bei Regen und öligem Dreck nachteilig. Denn gelangen ölige Rückstände oder Wasser an die Kontaktfläche zwischen den Reibelementen, vermindert dies ebenfalls die Arretierwirkung.

Die Betätigungseinrichtung, insbesondere die Rändelmutter, muss von ihrer Größe derart beschaffen sein, dass einerseits eine einfache Montage von Arretiereinrichtung und/oder Betätigungseinrichtung möglich ist und andererseits eine angenehme Betätigung möglich ist. Um genügend Raum für die Montage zur Verfügung zu stellen, kann es von Vorteil sein, zwischen Steuerlager und Kontermutter ein Distanzstück, insbesondere einen Ring, vorzusehen. Dieser Ring erhöht den Abstand zwischen Kontermutter und Steuerlager und schafft somit mehr Raum für die Montage einer größeren Betätigungseinrichtung und/oder einer größeren Arretiereinrichtung.

Eine Ausführungsform der Erfindung ist in den Zeichnungen dargestellt, und wird nachfolgend beispielhaft erläutert.

Es zeigen:
- **Fig. 1**: eine Seitenansicht der Arretiereinrichtung und des Steuerlagers;
- **Fig. 2**: das erste Reibelement im Längsschnitt entlang der Schnittlinie II-II;
- **Fig. 3**: das erste Reibelement im Querschnitt entlang der Schnittlinie I-I;
- **Fig. 4**: das zweite Reibelement im Querschnitt;
- **Fig. 5**: die Kontermutter in Seitenansicht.

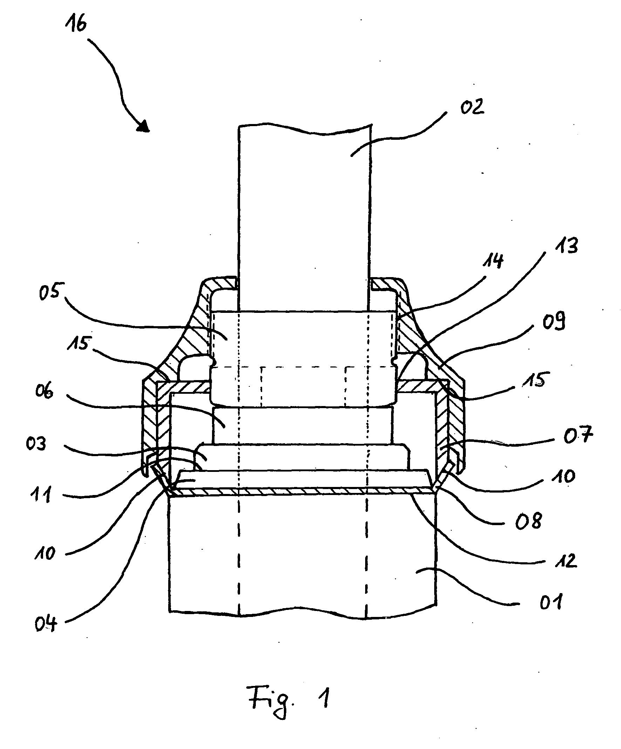

**Fig. 1** zeigt eine Seitenansicht der Arretiereinrichtung 16 und des Steuerlagers 03, 04 im Querschnitt. Das Fahrrad weist einen Rahmen 01, einen Gabelschaft 02, einen ersten 03 und einen zweiten 04 Steuerlagerteil, eine Kontermutter 05 zur Fixierung des Steuerlagers, ein Distanzstück 06 zwischen Kontermutter 05 und Steuerlager 03, 04 sowie das erste Reibelement 07, das zweite Reibelement 08 und die Betätigungseinrichtung 09 auf.

Der Gabelschaft 02, der erste Steuerlagerteil 03, das Distanzstück 06, die Kontermutter 05, das erste Reibelement 07 und die Betätigungseinrichtung 09 sind mit der Lenkeinrichtung drehfest verbunden, bilden eine erste Gruppe von Teilen und nehmen somit an der Lenkbewegung teil. Der Rahmen 01, der zweite Steuerlagerteil 04 und das zweite Reibelement 08 bilden eine zweite Gruppe von Teilen, die mit dem Rahmen drehfest verbunden sind. Alle mit der Lenkeinrichtung drehfest verbundenen Teile und alle mit dem Rahmen drehfest verbundenen Teile sind jeweils untereinander nicht verdrehbar. Somit findet während einer Lenkbewegung eine Relativbewegung nur an Kontaktflächen zwischen Teilen der ersten und der zweiten Gruppe statt. Diese Kontaktflächen 10, 11 finden sich einerseits zwischen erstem 07 und zweitem 08 Reibelement und andererseits zwischen erstem 03 und zweitem 04 Steuerlagerteil. Das Steuerlager ist jedoch reibungsverlustfrei ausgelegt, deshalb ist der für die Arretierung der Lenkeinrichtung relativ zum Rahmen notwendige Reibschluss an der Kontaktfläche 10 zwischen den Reibelementen 07, 08 aufbringbar.

Zum Einbau der Arretiereinrichtung 16 in ein Fahrrad wird zunächst das zweite Reibelement 08 zusammen mit dem zweiten Steuerlagerteil 04 in den Rahmen 01 mit einer Pressverbindung 12 eingepresst. Auf den von unten durch den Rahmen 01 hindurchgeschobenen Gabelschaft 02 wird der erste Steuerlagerteil 03 aufgeschraubt, gegebenenfalls das Distanzstück 06 auf den Gabelschaft aufgeschoben oder aufgeschraubt und die Kontermutter 05 gegengeschraubt. Das erste Reibelement 07 weist eine Aussparung 13 zur formschlüssigen Aufnahme der Kontermutter auf und wird auf diese aufgesetzt.

Die Betätigungseinrichtung 09 ist in dieser Ausführungsform als Rändelmutter ausgebildet und wird auf das Außengewinde 14 der Kontermutter aufgeschraubt. Durch Festschrauben der Betätigungseinrichtung 09 wird an der Kontaktfläche 15 zwischen der Betätigungseinrichtung 09 und erstem Reibelement 07 die Betätigungskraft auf das erste Reibelement ausgeübt. Somit wird das erste Reibelement 07 gegen das zweite Reibelement 08 gedrückt, und es wird an der Kontaktfläche 10 zwischen den Reibelementen 07, 08 die Feststellkraft zur Arretierung der Lenkeinrichtung relativ zum Rahmen aufgebracht. Zur Vergrößerung der Kontaktfläche 10 zwischen den Reibelementen 07, 08 ist die Kontaktfläche 10 relativ zur Lenkachse geneigt.

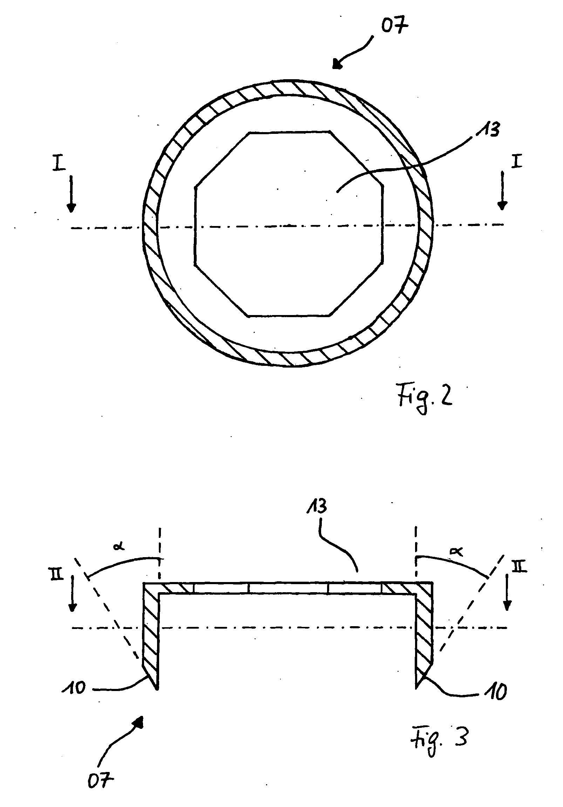

Die **Fig. 2** und **3** zeigen das erste Reibelement 07 im Längsschnitt **(Fig. 2)** und im Querschnitt **(Fig. 3).** Das erste Reibelement ist in Form eines kreisförmigen Zylinders ausgebildet. Die erste Grundseite des Zylinders ist teilweise geschlossen und mit einer Aussparung 13 zur formschlüssigen Aufnahme einer achteckigen Kontermutter 05 versehen. Die zweite Grundseite des Zylinders ist vollständig offen, und das Profil der Seitenwand des Zylinders ist an dieser Seite des Zylinders unter dem Winkel α relativ zur Senkrechten auf die Grundseite des Zylinders abgeschrägt. Dadurch wird die Kontaktfläche 10 zum zweiten Reibelement vergrößert.

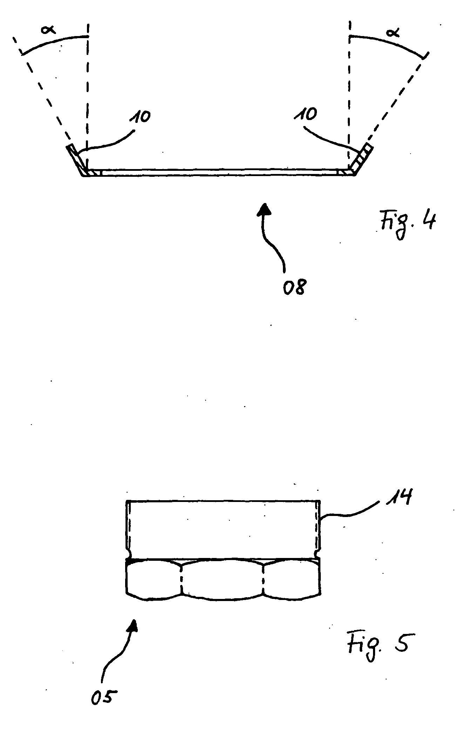

**Fig. 4** zeigt das zweite Reibelement 08 im Querschnitt. Das zweite Reibelement 08 ist ebenfalls zylinderförmig ausgebildet, wobei zumindest eine Grundseite des Zylinders vollständig offen ist. Die Seitenwände des Zylinders sind relativ zur Senkrechten auf die Grundseite um den Winkel α geneigt. Der Winkel α entspricht dabei genau dem Winkel, unter dem das Profil der Seitenwand des ersten Reibelementes abgeschrägt ist. Die Innenseite der geneigten Seitenwand des Zylinders bildet die Kontaktfläche 10 zum ersten Reibelement.

**Fig. 5** zeigt eine Seitenansicht der Kontermutter 05, wobei die Kontermutter 05 aus zwei Abschnitten besteht. Das Profil des ersten Abschnitts ist zur Aufnahme eines Schraubenschlüssels und zum Festschrauben der Kontermutter eckig ausgebildet. Auf diesen Abschnitt der Kontermutter 05 kann das mit der Aussparung 13 versehene erste Reibelement 07 aufgesetzt werden. Der zweite Abschnitt der Kontermutter 05 ist mit einem Außengewinde 14 versehen. Auf dieses Außengewinde kann die Betätigungseinrichtung 09, insbesondere die Rändelmutter, aufgeschraubt werden.

## Patentansprüche

1. Fahrrad mit einem Rahmen (01) und einer Lenkeinrichtung, die am Rahmen (01) in einem Führungselement drehbar gelagert ist, wobei der Fahrer durch Betätigung der Lenkeinrichtung die Stellung des Vorderrades relativ zum Rahmen (01) einstellen kann,
**dadurch gekennzeichnet,**
**dass** am Fahrrad eine Arretiereinrichtung (16) vorgesehen ist, wobei mit der Arretiereinrichtung (16) zwischen Lenkeinrichtung und Rahmen (01) eine Feststellkraft zur Arretierung der Stellung des Vorderrades relativ zum Rahmen (01) aufbringbar ist.

2. Fahrrad nach Anspruch 1,
**dadurch gekennzeichnet ,**
**dass** die Arretiereinrichtung (16) zumindest ein mit der Lenkeinrichtung drehfest verbundenes erstes Reibelement (07) und ein mit dem Rahmen (01) drehfest verbundenes zweites Reibelement (08) aufweist, wobei die Feststellkraft durch Reibschluss zwischen erstem (07) und zweitem (08) Reibelement aufbringbar ist.

3. Fahrrad nach Anspruch 1 oder 2,
**dadurch gekennzeichnet ,**
**dass** die Arretiereinrichtung (16) eine Betätigungseinrichtung (09) aufweist, wobei durch Betätigen der Betätigungseinrichtung (09) eine Betätigungskraft auf die Reibelemente (07, 08) ausgeübt wird.

4. Fahrrad nach einem der Ansprüche 1 bis 3,
**dadurch gekennzeichnet,**
**dass** die Größe der Feststellkraft durch Verstellen der Betätigungseinrichtung (09) mittelbar oder unmittelbar insbesondere stufenlos veränderbar ist.

5. Fahrrad nach einem der Ansprüche 1 bis 4,
**dadurch gekennzeichnet ,**
**dass** die Lenkeinrichtung einen Gabelschaft (02) aufweist, wobei die beiden Reibelemente (07, 08) den Gabelschaft (02) ringförmig umschließen.

6. Fahrrad nach einem der Ansprüche 1 bis 5,
**dadurch gekennzeichnet,**
**dass** die Lenkeinrichtung eine Kontermutter (05) zur Fixierung eines Steuerlagers (03, 04) aufweist, wobei das erste Reibelement (07) mit zumindest einem Abschnitt der Kontermutter (05) formschlüssig verbunden ist.

7. Fahrrad nach einem der Ansprüche 1 bis 6,
**dadurch gekennzeichnet,**
**dass** das erste Reibelement (07) eine mit dem Querschnitt zumindest eines Abschnittes der Kontermutter (05) korrespondierende Aussparung (13) zur formschlüssigen Aufnahme der Kontermutter (05) aufweist.

8. Fahrrad nach einem der Ansprüche 1 bis 7,
**dadurch gekennzeichnet,**
**dass** das zweite Reibelement (08) mit dem Führungselement des Rahmens (01), insbesondere durch eine Pressverbindung (12), formschlüssig verbunden ist.

9. Fahrrad nach einem der Ansprüche 1 bis 8,
**dadurch gekennzeichnet,**
**dass** die Kontaktfläche (10) der beiden Reibelemente (07, 08) relativ zur Wirkungslinie der Betätigungskraft, insbesondere der Lenkachse, geneigt ist.

10. Fahrrad nach einem der Ansprüche 1 bis 9,
**dadurch gekennzeichnet,**
**dass** zumindest ein Reibelement (07, 08) abschnittsweise eine gleithemmende und/oder haftunterstützende Oberfläche aufweist.

11. Fahrrad nach einem der Ansprüche 1 bis 10,
**dadurch gekennzeichnet,**
**dass** zumindest ein Reibelement (07, 08) in Form eines Bremsbelages ausgebildet ist.

12. Fahrrad nach einem der Ansprüche 1 bis 11,
**dadurch gekennzeichnet,**
**dass** die Betätigungseinrichtung (09) manuell betätigbar ist.

13. Fahrrad nach einem der Ansprüche 1 bis 12,
**dadurch gekennzeichnet,**
**dass** die Betätigungseinrichtung (09) in Form einer Rändelmutter ausgebildet ist.

14. Fahrrad nach einem der Ansprüche 1 bis 13,
**dadurch gekennzeichnet,**
**dass** die Lenkeinrichtung eine Kontermutter (05) zur Fixierung eines Steuerlagers (03, 04) aufweist, wobei zumindest ein Abschnitt der Kontermutter (05) ein Außengewinde (14) aufweist.

15. Fahrrad nach einem der Ansprüche 1 bis 14,
**dadurch gekennzeichnet,**
**dass** die Betätigungseinrichtung (09) auf das Außengewinde (14) der Kontermutter (05) aufschraubbar ist.

16. Fahrrad nach einem der Ansprüche 1 bis 14,
**dadurch gekennzeichnet,**
**dass** die Lenkeinrichtung einen mit einem Gewinde versehenen Gabelschaft (02) aufweist, wobei die Betätigungseinrichtung (09) auf das Gewinde des Gabelschaftes (02) aufschraubbar ist.

17. Fahrrad nach einem der Ansprüche 1 bis 16,
**dadurch gekennzeichnet,**
**dass** die Betätigungseinrichtung (09) das Steuerlager (03, 04) und/oder die Arretiereinrichtung (16) umschließt.

18. Fahrrad nach einem der Ansprüche 1 bis 17,
**dadurch gekennzeichnet,**
**dass** zwischen Steuerlager (03, 04) und Kontermutter (05) ein Distanzstück (06), insbesondere ein Ring, vorgesehen ist.
